# EUROPEAN PATENT APPLICATION

(11) **EP 4 699 685 A1**
(43) Date of publication of application: **25.02.2026**
(21) Application number: 24792528.2
(22) Date of filing: 05.04.2024
(51) Int. Cl.: B01D 53/76, B01D 53/46, B01D 53/68, F23G 7/06, F23M 5/08

(54) **EXHAUST GAS TREATMENT DEVICE AND EXHAUST GAS TREATMENT METHOD**

(30) Priority: 19.04.2023 JP 2023068439; 04.03.2024 JP 2024031883
(71) Applicant: Ebara Corporation, Ohta-ku, Tokyo 144-8510 (JP)
(72) Inventor: MIYAZAKI, Kazutomo, Tokyo 144-8510 (JP); HOSOTANI, Kazumasa, Tokyo 144-8510 (JP); CHUJO, Takayuki, Tokyo 144-8510 (JP); KYOTANI, Takashi, Tokyo 144-8510 (JP)
(74) Representative: Wimmer, Hubert
(86) International application number: PCT/JP2024/014043
(87) International publication number: WO 2024/219253

(57) **Abstract**

The present invention relates to an exhaust gas treatment apparatus and an exhaust gas treatment method for treating an exhaust gas, which is discharged from a manufacturing apparatus or the like for manufacturing semiconductor devices, liquid crystals, LEDs, or the like, to make the exhaust gas harmless. The exhaust gas treatment apparatus (1) for treating the exhaust gas, includes: a heat generating section (2) including a heat generator (5) configured to generate heat; and a heat treatment section (3) coupled to the heat generating section (2) and configured to perform heat treatment on the exhaust gas with the heat. The heat treatment section (3) includes: a cylindrical body (20) that forms a flow passage (F) for the exhaust gas; and a water supply structure (30) configured to supply water in the cylindrical body (20) to form a water film on an inner surface of the cylindrical body, and the cylindrical body (20) has a diameter-increasing portion (21) where a diameter of the cylindrical body (20) increases.

## Description

### Technical Field

The present invention relates to an exhaust gas treatment apparatus and an exhaust gas treatment method for treating an exhaust gas, which is discharged from a manufacturing apparatus or the like for manufacturing semiconductor devices, liquid crystals, LEDs, or the like, to make the exhaust gas harmless.

### Background Art

In a semiconductor manufacturing process of manufacturing semiconductor devices, liquid crystal panels, LEDs, or the like, a process gas is introduced into a process chamber to perform various processes, such as an etching process, a CVD process or the like, while the process chamber is evacuated. The process chamber and exhaust apparatuses coupled to the process chamber are cleaned periodically by supplying a cleaning gas thereto. Because exhaust gases, such as the process gas and the cleaning gas, contain a silane-based gas, a halogen gas, a PFC gas or the like, such exhaust gases have negative effects on the human body and on the global environment, such as global warming. Therefore, it is not preferable that these exhaust gases are emitted to the atmosphere as they are. Thus, these exhaust gases are made harmless by an exhaust gas treatment apparatus provided at a downstream side of the semiconductor manufacturing apparatus, so that the harmless exhaust gases are emitted to the atmosphere.

The exhaust gas treatment apparatus is configured to detoxify the exhaust gas by thermal and oxidative decomposition treatment in a cylindrical body that forms a flow passage for the exhaust gas. In such an exhaust gas treatment apparatus, a large amount of powdery product (mainly SiO₂) is generated as a by-product during the heat treatment of the exhaust gas and may adhere to and be deposited on the inside of the cylindrical body. In addition, when fluorine-based or chlorine-based corrosive gas is contained in the exhaust gas, an inner wall surface of the cylindrical body may be corroded by corrosive mist. Therefore, an exhaust gas treatment apparatus has been proposed that forms a water film on the inner wall surface of the cylindrical body to prevent the adhesion of the by-product to the cylindrical body and the contact of the corrosive gas with the inner surface of the cylindrical body.

### Citation List

### Patent Literature

Patent document 1: Japanese laid-open patent publication No. 2008-161861

### Summary of Invention

### Technical Problem

With a recent trend toward larger semiconductor wafers and finer interconnects, an amount of the exhaust gas discharged from the semiconductor manufacturing apparatus has been increasing. Therefore, in order to efficiently treat the exhaust gas, it is required to increase a capacity of the cylindrical body of the exhaust gas treatment apparatus and sufficiently mix the exhaust gas with heat (e.g., flame, thermal plasma jet, etc.) in the cylindrical body to promote the thermal and oxidative decomposition reaction of the exhaust gas.

Thus, the present invention provides an exhaust gas treatment apparatus and an exhaust gas treatment method capable of preventing adhesion of a by-product to a cylindrical body and preventing contact of corrosive gas and corrosive mist with the cylindrical body, and capable of efficiently treating an exhaust gas.

### Solution to Problem

In an embodiment, there is provided an exhaust gas treatment apparatus for treating an exhaust gas, comprising: a heat generating section including a heat generator configured to generate heat; and a heat treatment section coupled to the heat generating section and configured to perform heat treatment on the exhaust gas with the heat, wherein the heat treatment section includes: a cylindrical body that forms a flow passage for the exhaust gas; and a water supply structure configured to supply water in the cylindrical body to form a water film on an inner surface of the cylindrical body, the cylindrical body having a diameter-increasing portion where a diameter of the cylindrical body increases.

In an embodiment, the diameter-increasing portion has a shape such that the diameter gradually increases along a downward direction.

**In** an embodiment, the cylindrical body further has a small-diameter straight pipe portion coupled to an upper end of the diameter-increasing portion.

In an embodiment, an inner surface of the diameter-increasing portion comprises a rough surface formed by a surface-roughening process, and the inner surface of the diameter-increasing portion has a sliding angle such that the water film is formed on the entire inner surface of the diameter-increasing portion.

In an embodiment, the cylindrical body further has a large-diameter straight pipe portion coupled to a lower end of the diameter-increasing portion.

In an embodiment, the cylindrical body further has a diameter shrink portion where the diameter gradually shrinks along a downward direction, the diameter shrink portion being coupled to a lower end of the large-diameter straight pipe portion.

In an embodiment, the cylindrical body further has a diameter shrink portion where the diameter gradually shrinks along a downward direction, the diameter shrink portion being coupled to a lower end of the diameter-increasing portion.

In an embodiment, there is provided an exhaust gas treatment method of treating an exhaust gas, comprising: treating the exhaust gas by mixing heat generated by a heat generating section with the exhaust gas in a cylindrical body; and during treatment of the exhaust gas, supplying water in the cylindrical body to form a water film on an inner surface of the cylindrical body, wherein the cylindrical body has a diameter-increasing portion where a diameter of the cylindrical body increases, and during treatment of the exhaust gas, the water film is formed on an entire inner surface of the diameter-increasing portion.

In an embodiment, the diameter-increasing portion has a shape such that the diameter gradually increases along a downward direction.

In an embodiment, the cylindrical body further has a small-diameter straight pipe portion coupled to an upper end of the diameter-increasing portion, and during treatment of the exhaust gas, the water film is formed on an entire inner surface of the small-diameter straight pipe portion.

In an embodiment, the inner surface of the diameter-increasing portion comprises a rough surface formed by a surface-roughening process, and the inner surface of the diameter-increasing portion has a sliding angle such that the water film is formed on the entire inner surface of the diameter-increasing portion.

In an embodiment, the cylindrical body further has a large-diameter straight pipe portion coupled to a lower end of the diameter-increasing portion, and during treatment of the exhaust gas, the water film is formed on an entire inner surface of the large-diameter straight pipe portion.

In an embodiment, the cylindrical body further has a diameter shrink portion where the diameter gradually shrinks along a downward direction, the diameter shrink portion being coupled to a lower end of the large-diameter straight pipe portion, and during treatment of the exhaust gas, the water film is formed on an entire inner surface of the diameter shrink portion.

In an embodiment, the cylindrical body further has a diameter shrink portion where the diameter gradually shrinks along a downward direction, the diameter shrink portion being coupled to a lower end of the diameter-increasing portion, and during treatment of the exhaust gas, the water film is formed on an entire inner surface of the diameter shrink portion.

### Advantageous Effects of Invention

According to the present invention, the water film is formed on the inner surface of the cylindrical body, so that adhesion of a by-product to the cylindrical body and contact of corrosive gas with the cylindrical body can be prevented. Furthermore, the cylindrical body having the diameter-increasing portion provides the flow passage for the exhaust gas that expands in a radial direction, so that a large amount of the exhaust gas can be treated. In addition, turbulence is formed when the exhaust gas passes through the diameter-increasing portion, and simultaneously the heat (e.g., flame, plasma, etc.) is diffused in the diameter-increasing portion. As a result, the exhaust gas and the heat can be mixed sufficiently. Therefore, the exhaust gas can be treated efficiently in the diameter-increasing portion.

### Brief Description of Drawings

[FIG. 1] FIG. 1 is a cross-sectional view schematically showing an embodiment of an exhaust gas treatment apparatus;
[FIG. 2] FIG. 2 is a cross-sectional view taken along line A-A of FIG. 1;
[FIG. 3] FIG. 3 is a cross-sectional view taken along line B-B of FIG. 1;
[FIG. 4] FIG. 4 is a cross-sectional view taken along line C-C of FIG. 1;
[FIG. 5] FIG. 5 is a cross-sectional view taken along line D-D of FIG. 1;
[FIG. 6] FIG. 6 is a cross-sectional view schematically showing another embodiment of the exhaust gas treatment apparatus;
[FIG. 7] FIG. 7 is a cross-sectional view schematically showing still another embodiment of the exhaust gas treatment apparatus;
[FIG. 8] FIG. 8 is a cross-sectional view schematically showing still another embodiment of the exhaust gas treatment apparatus;
[FIG. 9] FIG. 9 is an enlarged cross-sectional view schematically showing still another embodiment of the exhaust gas treatment apparatus;
[FIG. 10] FIG. 10 is an enlarged cross-sectional view schematically showing still another embodiment of the exhaust gas treatment apparatus;
[FIG. 11] FIG. 11 is a cross-sectional view schematically showing still another embodiment of the exhaust gas treatment apparatus;
[FIG. 12] FIG. 12 is a cross-sectional view schematically showing still another embodiment of the exhaust gas treatment apparatus;
[FIG. 13] FIG. 13 is a cross-sectional view schematically showing still another embodiment of the exhaust gas treatment apparatus; and
[FIG. 14] FIG. 14 is a cross-sectional view schematically showing still another embodiment of the exhaust gas treatment apparatus.

### Description of Embodiments

Hereinafter, embodiments of the present invention will be described with reference to the drawings.

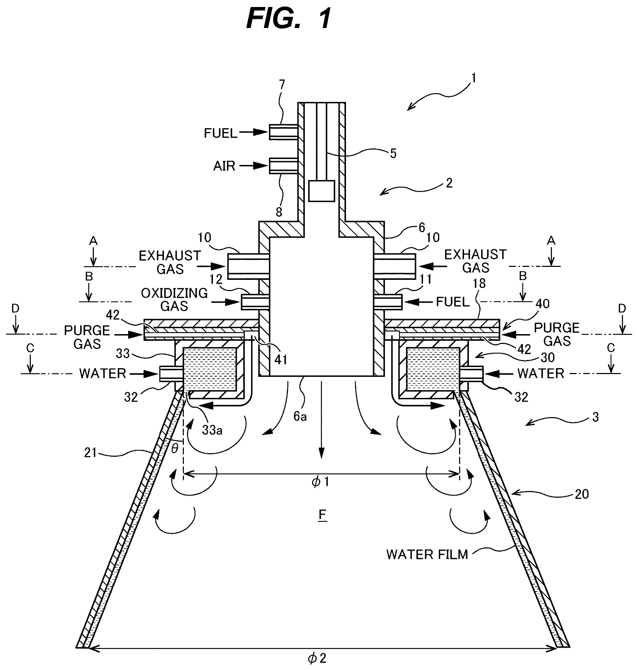

FIG. 1 is a cross-sectional view schematically showing an embodiment of an exhaust gas treatment apparatus 1. The exhaust gas treatment apparatus 1 of this embodiment is configured to treat an exhaust gas, which is discharged from a manufacturing apparatus or the like for manufacturing semiconductor devices, liquid crystals, LEDs or the like, to make the exhaust gas harmless. Examples of the exhaust gas include gases containing harmful combustible gas, such as silane gas (SiH₄) and halogen-based gases (NF₃, ClF₃, SF₆, CHF₃, C₂F₆, CF₄). Examples of the exhaust gas treatment apparatus 1 include a combustion-type exhaust gas treatment apparatus, a thermal plasma-type exhaust gas treatment apparatus, and a heater-type exhaust gas treatment apparatus.

The exhaust gas treatment apparatus 1 includes a heat generating section 2 including a heat generator 5 configured to generate heat, and a heat treatment section (reaction section) 3 configured to perform heat treatment on the exhaust gas with the heat. In this embodiment, the exhaust gas treatment apparatus 1 is a combustion-type exhaust gas treatment apparatus, and the heat generator 5 is a combustion burner configured to generate a flame. However, the configuration of the heat generating section 2 is not limited to this embodiment described below as long as the heat generating section 2 can generate the heat for treating the exhaust gas. For example, the heat generator 5 may be a plasma generator configured to generate plasma, an electric heater, or another heat source.

The heat generating section 2 has an exhaust-gas introduction section 6 having a cylindrical shape located below the heat generator 5. The heat generating section 2 is closed at its upper end where the heat generator 5 is located. The heat generating section 2 has an opening 6a at a lower end of the exhaust-gas introduction section 6. The heat generating section 2 includes a fuel supply nozzle 7 configured to supply a fuel to the heat generator 5, and an air supply nozzle 8 configured to supply air. The heat generator (combustion burner) 5 is configured to be ignited by the fuel supplied from the fuel supply nozzle 7 and the air supplied from the air supply nozzle 8 to thereby generate a flame.

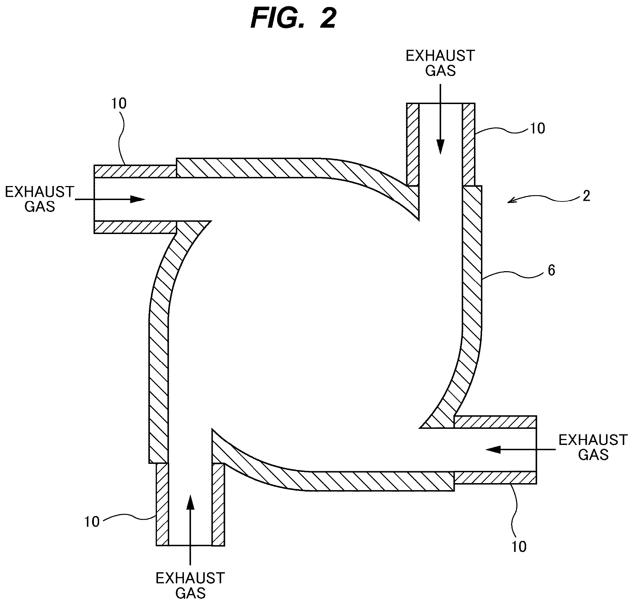

The heat generating section 2 includes exhaust gas nozzle(s) 10 configured to blow the exhaust gas (i.e., gas to be treated) into the exhaust-gas introduction section 6, fuel nozzle(s) 11 configured to blow a fuel (i.e., fuel gas) into the exhaust-gas introduction section 6, and oxidizing-gas nozzle(s) 12 configured to blow an oxidizing gas (i.e., oxygen-containing gas) into the exhaust-gas introduction section 6. The exhaust gas nozzle(s) 10, the fuel nozzle(s) 11, and the oxidizing-gas nozzle(s) 12 are coupled to the exhaust-gas introduction section 6. FIG. 2 is a cross-sectional view taken along line A-A of FIG. 1. As shown in FIG. 2, the heat generating section 2 of this embodiment includes four exhaust gas nozzles 10. Each of the exhaust gas nozzles 10 is arranged so as to blow the exhaust gas in a tangential direction of an inner circumferential surface of the heat generating section 2.

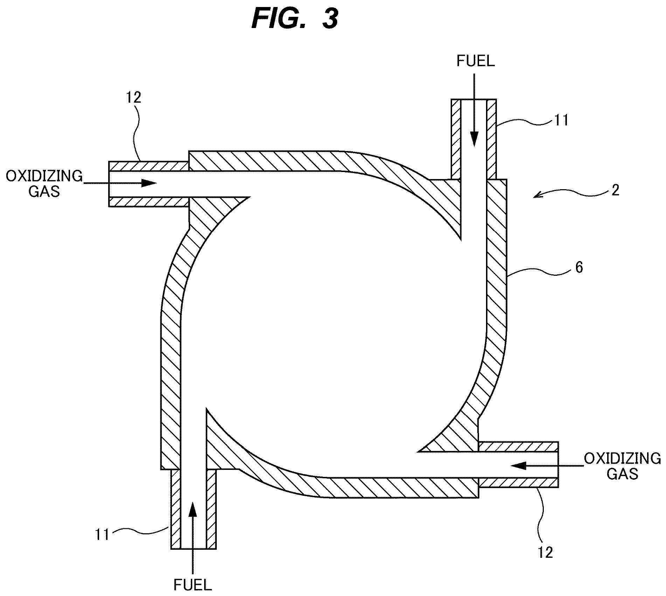

FIG. 3 is a cross-sectional view taken along line B-B of FIG. 1. As shown in FIG. 3, the heat generating section 2 of this embodiment includes two fuel nozzles 11 and two oxidizing-gas nozzles 12. Each of the fuel nozzles 11 is arranged so as to blow the fuel in a tangential direction of the inner circumferential surface of the exhaust-gas introduction section 6. Each of the oxidizing-gas nozzles 12 is arranged so as to blow the oxidizing gas in a tangential direction of the inner circumferential surface of the exhaust-gas introduction section 6. In this embodiment, the heat generating section 2 includes the four exhaust gas nozzles 10, the two fuel nozzles 11, and the two oxidizing-gas nozzles 12, but the number of exhaust gas nozzles 10, the number of fuel nozzles 11, and the number of oxidizing-gas nozzles 12 are not limited to those of this embodiment. For example, the heat generating section 2 may include a single exhaust gas nozzle 10, a single fuel nozzle 11, and a single oxidizing-gas nozzle 12.

In this embodiment, the exhaust gas nozzles 10 are arranged at different position in an axial direction of the heat generating section 2 from the fuel nozzles 11 and the oxidizing-gas nozzles 12, but the arrangements of the exhaust gas nozzles 10, the fuel nozzles 11, and the oxidizing-gas nozzles 12 are not limited to this embodiment. For example, the exhaust gas nozzles 10, the fuel nozzles 11, and the oxidizing-gas nozzles 12 may be arranged in the same plane perpendicular to an axis of the heat generating section 2.

In one embodiment, flow velocities of the exhaust gas, the fuel, and the oxidizing gas blown into the exhaust-gas introduction section 6 of the heat generating section 2 from the exhaust gas nozzles 10, the fuel nozzles 11, and the oxidizing-gas nozzles 12, respectively, are equal to or higher than a combustion velocity of the flame generated by the heat generator 5. When the exhaust gas, the fuel, and the oxidizing gas are blown in the tangential directions of the inner circumferential surface of the exhaust-gas introduction section 6 at the flow velocities equal to or higher than the combustion speed of the flame, a cylindrical mixed flame of a mixture of the three kinds of gases is formed at a distance from the inner circumferential surface of the exhaust-gas introduction section 6. The cylindrical mixed flame is formed along the axial direction of the heat generating section 2.

By blowing the three kinds of gases in the tangential directions, a swirling centrifugal force is generated to form a gas distribution in which the three kinds of unburned mixed gases with a low temperature and a heavy weight are located at an outer part of the cylindrical mixed flame, and the three kinds of burned mixed gases with a high temperature and a light weight are located at an inner part of the cylindrical mixed flame. Therefore, the cylindrical mixed flame is covered with the three kinds of unburned mixed gases having a low temperature and is thus thermally self-insulated, so that a temperature drop due to heat dissipation does not occur and the gas treatment with a high combustion efficiency can be performed. Furthermore, the exhaust gas is normally diluted with N₂ gas and is then introduced into the exhaust-gas introduction section 6. The exhaust gas containing the N₂ gas is mixed with the fuel and the oxidizing gas and combusted together to thereby become slow combustion. As a result, a local high-temperature portion is not formed, so that generation of NO_{X} is suppressed.

As shown in FIG. 1, the heat treatment section 3 includes an annular lid plate 18 that closes an upper end of the heat treatment section 3, a cylindrical body 20 that forms a flow passage F for the exhaust gas, and a water supply structure 30 configured to form a water film on an inner surface of the cylindrical body 20. The heat treatment section 3 is coupled to the heat generating section 2. More specifically, the lid plate 18 of the heat treatment section 3 is coupled to an outer surface of the exhaust-gas introduction section 6 of the heat generating section 2. The opening 6a of the exhaust-gas introduction section 6 is located in the cylindrical body 20. The mixed flame containing the exhaust gas which is formed in the exhaust-gas introduction section 6 flows into the cylindrical body 20 through the opening 6a of the exhaust-gas introduction section 6.

In one embodiment, the flow velocities of the exhaust gas, the fuel, and the oxidizing gas blown into the exhaust-gas introduction section 6 of the heat generating section 2 from the exhaust gas nozzles 10, the fuel nozzles 11, and the oxidizing-gas nozzles 12, respectively, are set such that an air ratio in the exhaust-gas introduction section 6 is approximately 0.5 and an air ratio in the cylindrical body 20 is 1 or more. The air ratio of approximately 0.5 (i.e., an oxygen-deficient state) in the exhaust-gas introduction section 6 can prevent powdery product (mainly SiO₂), generated as a by-product of the heat treatment of the exhaust gas, from adhering to an inner surface of the exhaust-gas introduction section 6. Furthermore, the air ratio of 1 or more in the cylindrical body 20 can assist the sufficient heat treatment of the exhaust gas in the cylindrical body 20.

The cylindrical body 20 has a diameter-increasing portion 21 where a diameter of the cylindrical body 20 increases. In this embodiment, the diameter-increasing portion 21 has a shape such that the diameter gradually increases along a downward direction. A diameter φ2 of a lower end of the diameter-increasing portion 21 is larger than a diameter φ1 of an upper end of the diameter-increasing portion 21. An inner surface of the diameter-increasing portion 21 has a truncated cone shape. The cylindrical body 20 having the diameter-increasing portion 21 can form the flow passage F for the exhaust gas that expands in a radial direction, so that a large amount of the exhaust gas can be treated. In addition, the exhaust gas flowing into the cylindrical body 20 from the exhaust-gas introduction section 6 of the heat generating section 2 forms turbulence in the diameter-increasing portion 21, and simultaneously the flame forms a diffusion flame along the increase in the diameter of the diameter-increasing portion 21. The exhaust gas and the diffusion flame are mixed sufficiently in the diameter-increasing portion 21. Therefore, the exhaust gas can be treated efficiently.

The water supply structure 30 is coupled to an upper part of the cylindrical body 20. The water supply structure 30 includes a water reservoir 33 having a slit nozzle 33a configured to supply water for forming the water film on the inner surface of the cylindrical body 20, and water supply port(s) 32 configured to supply water to the water reservoir 33. The water supply port(s) 32 is coupled to an outer circumferential surface of the water reservoir 33 and is configured to supply the water to the water reservoir 33. The water reservoir 33 of this embodiment is located radially inwardly of an upper end of the cylindrical body 20.

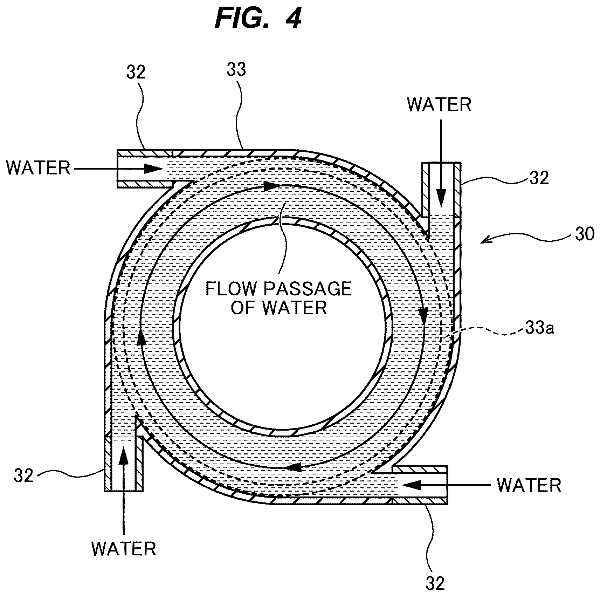

FIG. 4 is a cross-sectional view taken along line C-C of FIG. 1. The water reservoir 33 has a hollow annular structure with a rectangular cross section. In this embodiment, the water supply structure 30 has four water supply ports 32. Each of the water supply ports 32 is arranged so as to supply the water in a tangential direction of an inner circumferential surface of the water reservoir 33. A flow passage for the water supplied from the water supply ports 32 is formed in the water reservoir 33. The water reservoir 33 has the slit nozzle 33a having an annular shape in a bottom thereof. The slit nozzle 33a is located in an outer periphery of the bottom of the water reservoir 33 and extends along an upper end of the inner surface of the cylindrical body 20.

The water injected from the water supply ports 32 in the tangential directions of the inner circumferential surface of the water reservoir 33 flows along the inner circumferential surface of the water reservoir 33 to form a swirling flow. The water in the water reservoir 33 flows out from the slit nozzle 33a while the swirling flow is formed, flows diagonally downward along the inner surface of the cylindrical body 20 to form the water film on the inner surface of the cylindrical body 20 during treatment of the exhaust gas. Since a centrifugal force acts in the radially outward direction on the water forming the swirling flow, the water film does not break (peel off) even in the diameter-increasing portion 21 where the diameter increases. As a result, the water film can be formed on the entire inner surface of the cylindrical body 20.

In this embodiment, four water supply ports 32 are provided, while the number of water supply ports 32 is not limited to this embodiment as long as the swirling flow of the water can be formed in the water reservoir 33. For example, two water supply ports 32 may be provided, or a single water supply port 32 may be provided.

According to an experiment conducted by the inventors, it has been found that breaking of the water film formed on the inner surface of the diameter-increasing portion 21 depends on an angle θ of the inner surface of the diameter-increasing portion 21 with respect to a vertical direction shown in FIG. 1, and on a flow rate of the water supplied from the water supply port(s) 32. Specifically, as the angle θ of the diameter-increasing portion 21 increases, the water film breaks more easily, and as the flow rate of the water supplied from the water supply port(s) 32 decreases, the water film breaks more easily. The angle θ of the diameter-increasing portion 21 and the flow rate of the water supplied from the water supply port(s) 32 are appropriately set such that the water film does not break on the entire inner surface of the diameter-increasing portion 21. In one embodiment, the angle θ of the inner surface of the diameter-increasing portion 21 is in a range of 15 degrees to 105 degrees. In one embodiment, the angle θ of the inner surface of the diameter-increasing portion 21 is in a range of 30 degrees to 80 degrees. When the angle θ is in the range of 30 degrees to 80 degrees, the diameter of the diameter-increasing portion 21 precipitously increases, so that the flow velocity of the water flowing on the inner surface of the diameter-increasing portion 21 accelerates due to gravity. Therefore, forming of the water film on the inner surface of the diameter-increasing portion 21 can be accelerated and forming of the turbulence of the exhaust gas flowing into the diameter-increasing portion 21 can be accelerated.

Examples of material that can be used for the cylindrical body 20 include metal (e.g., stainless steel) and resin (e.g., polyvinyl chloride (PVC)). The inner surface of the diameter-increasing portion 21 in this embodiment is a rough surface formed by a surface-roughening process. An example of the surface-roughening process is a blasting process. This surface-roughening process improves an adhesive property of the water to the inner surface of the diameter-increasing portion 21, and as a result, a uniform water film can be formed on the entire inner surface of the diameter-increasing portion 21.

The inner surface of the diameter-increasing portion 21 that has been subjected to the surface-roughening process has a sliding angle such that the water film is formed on the entire inner surface of the diameter-increasing portion 21. The sliding angle is a slope angle of a sample at which a liquid droplet begins to slide on the sample when the sample is gradually tilted after the liquid droplet is dropped onto a surface of the sample horizontally placed. The sliding angle is an index that indicates a slipperiness of the liquid droplet on the surface of the sample. The larger the sliding angle of the inner surface of the diameter-increasing portion 21, the less likely the water film flows downward (i.e., the water film is more easily retained on the inner surface of the diameter-increasing portion 21), and the less likely the water film breaks. As a result, a uniform water film can be formed on the entire inner surface of the cylindrical body 20. In one embodiment, the inner surface of the diameter-increasing portion 21 may be a rough surface formed by a surface-roughening process that maximizes the sliding angle.

In one embodiment, when the material constituting the diameter-increasing portion 21 has a sliding angle that allows the water film to be formed on the entire inner surface of the diameter-increasing portion 21, the inner surface of the diameter-increasing portion 21 may not be subjected to the surface-roughening process.

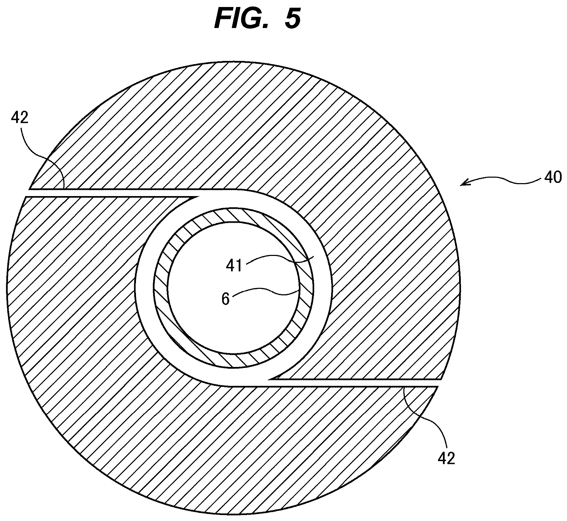

As shown in FIG. 1, the heat treatment section 3 further includes a purge-gas supply section 40 disposed between the lid plate 18 and the water supply structure 30 and configured to supply purge gas into the heat treatment section 3. FIG. 5 is a cross-sectional view taken along line D-D of FIG. 1. The purge-gas supply section 40 has an annular groove 41 located inside the purge-gas supply section 40, and purge-gas supply flow passage(s) 42 configured to supply the purge gas to the annular groove 41. A lower end of the annular groove 41 is open, and the annular groove 41 communicates with the flow passage F for the exhaust gas in the heat treatment section 3. The annular groove 41 is located between the exhaust-gas introduction section 6 and the water reservoir 33. Specifically, the annular groove 41 is located radially outwardly of the exhaust-gas introduction section 6 and is located radially inwardly of the water reservoir 33.

In this embodiment, the purge-gas supply section 40 includes two purge-gas supply flow passages 42. Each of the two purge-gas supply flow passages 42 is arranged such that the purge gas is supplied in a tangential direction of an outer circumferential surface of the annular groove 41. The purge gas supplied from the purge-gas supply flow passages 42 to the annular groove 41 fills the entire circumference of the annular groove 41 and is ejected downwardly from the entire circumference of the lower end of the annular groove 41. Examples of the purge gas include air, nitrogen gas, and a mixture of oxygen gas and air.

In this embodiment, the two purge-gas supply flow passages 42 are provided, while the number of purge-gas supply flow passages 42 is not limited to this embodiment as long as the annular groove 41 can be filled with the purge gas. For example, a single purge-gas supply flow passage 42 may be provided. In one embodiment, the purge-gas supply section 40 may be integrally formed with the lid plate 18.

The exhaust gas may contain a water-reactive substance that generates a solid matter by hydrolysis, such as dichlorosilane (SiH₂Cl₂). In that case, when the water flowing out from the slit nozzle 33a of the water reservoir 33 adheres to an upper part of the heat treatment section 3 (an outer surface of the water reservoir 33 in this embodiment), the solid matter may be produced and may adhere and accumulate on the upper part of the heat treatment section 3, thereby blocking the flow passage F for the exhaust gas. This is because a large amount of dichlorosilane that has not been thermally and oxidatively decomposed exists in the upper part of the heat treatment section 3.

The purge gas is blown at an appropriate flow rate from the purge-gas supply flow passages 42, so that a downward flow of the purge gas covering the upper part of the heat treatment section 3 (the outer surface of the water reservoir 33 in this embodiment) is formed. A diameter of the annular groove 41 that releases the purge gas is smaller than the diameter φ1 of the upper end of the diameter-increasing portion 21. Since an opening area of the annular groove 41 can be small, a flow velocity of the purge gas emitted downward from the annular groove 41 can be increased. Such a downward flow of the purge gas prevents the upper part of the heat treatment section 3 (the outer surface of the water reservoir 33 in this embodiment) from getting wet to prevent adhesion of the solid matter, so that clogging of the flow passage F for the exhaust gas can be prevented. In one embodiment, when the exhaust gas does not contain the water-reactive substance, the exhaust gas treatment apparatus 1 may not include the purge-gas supply section 40.

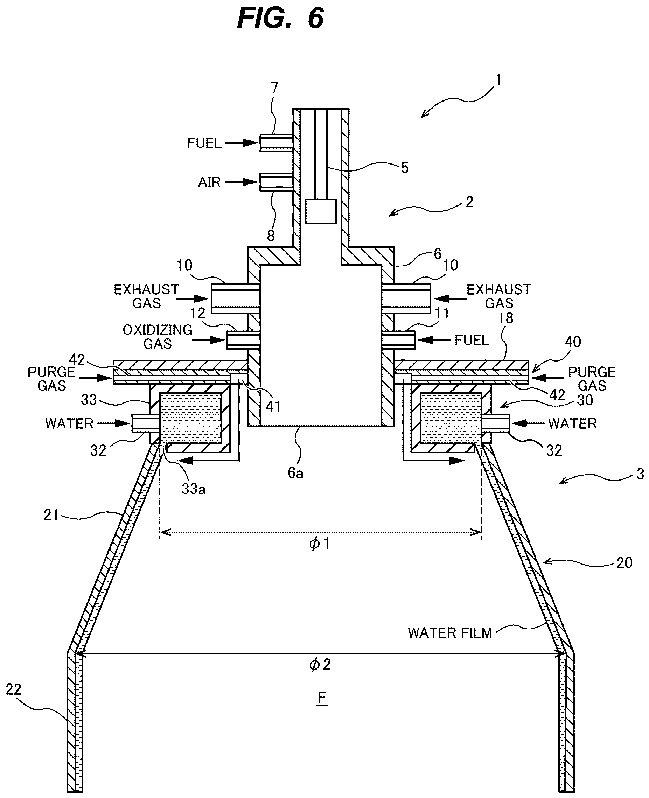

FIG. 6 is a cross-sectional view schematically showing another embodiment of the exhaust gas treatment apparatus 1. Configurations of this embodiment, which will not be particularly described, are the same as those of the above-described embodiments, and duplicated descriptions will be omitted. The cylindrical body 20 of this embodiment further has a large-diameter straight pipe portion 22 coupled to the lower end of the diameter-increasing portion 21. The large-diameter straight pipe portion 22 has a cylindrical shape and has a diameter equal to the diameter φ2 of the lower end of the diameter-increasing portion 21. The "large-diameter" of the large-diameter straight pipe portion 22 does not mean that the large-diameter straight pipe portion 22 has a diameter larger than a specific numerical value, but means that the large-diameter straight pipe portion 22 has a larger diameter relative to the diameter φ1 of the upper end of the diameter-increasing portion 21. In this embodiment, the above-described water film is formed on the entire inner surfaces of the diameter-increasing portion 21 and the large-diameter straight pipe portion 22 during treatment of the exhaust gas. In one embodiment, the inner surface of the large-diameter straight pipe portion 22 may be a rough surface formed by a surface-roughening process.

In this embodiment, the exhaust gas flowing into the cylindrical body 20 from the exhaust-gas introduction section 6 of the heat generating section 2 forms turbulence in the diameter-increasing portion 21, while the flame forms a diffusion flame along the increase in the diameter of the diameter-increasing portion 21 and extends to the large-diameter straight pipe portion 22. The cylindrical body 20 of this embodiment forms the flow passage F for the exhaust gas further extending in the axial direction in the large-diameter straight pipe portion 22, so that a large amount of the exhaust gas can be treated. Therefore, a large amount of the exhaust gas can be treated efficiently.

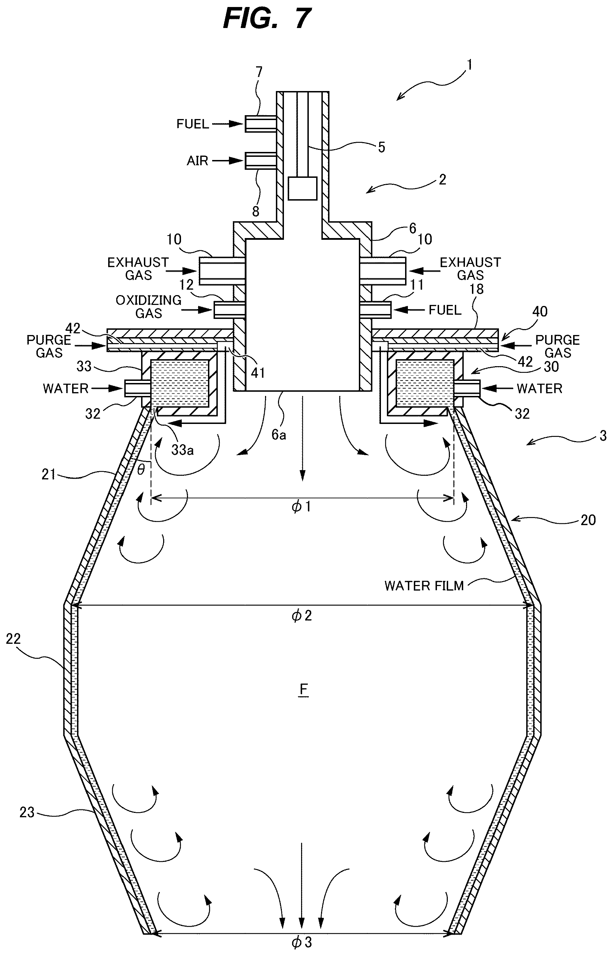

FIG. 7 is a cross-sectional view schematically showing still another embodiment of the exhaust gas treatment apparatus 1. Configurations of this embodiment, which will not be particularly described, are the same as those of the embodiment described with reference to FIG. 6, and duplicated descriptions will be omitted. The cylindrical body 20 of this embodiment further has a diameter shrink portion 23 coupled to a lower end of the large-diameter straight pipe portion 22. The diameter shrink portion 23 has a shape such that the diameter gradually shrinks along a downward direction, and a diameter φ3 of a lower end of the diameter shrink portion 23 is smaller than the diameter φ2 of an upper end of the diameter shrink portion 23. In one embodiment, the diameter φ3 of the lower end of the diameter shrink portion 23 is the same as the diameter φ1 of the upper end of the diameter-increasing portion 21. An inner surface of the diameter shrink portion 23 has an inverted truncated cone shape. In this embodiment, the above-described water film is formed on the entire inner surfaces of the diameter-increasing portion 21, the large-diameter straight pipe portion 22, and the diameter shrink portion 23 during treatment of the exhaust gas. In one embodiment, the inner surfaces of the large-diameter straight pipe portion 22 and the diameter shrink portion 23 may be rough surfaces formed by a surface-roughening process.

The cylindrical body 20 of this embodiment forms the flow passage F for the exhaust gas further extending in the axial direction in the diameter shrink portion 23, so that a large amount of the exhaust gas can be treated. Furthermore, as shown in FIG. 7, the exhaust gas flowing into the cylindrical body 20 from the exhaust-gas introduction section 6 of the heat generating section 2 forms turbulence in the diameter-increasing portion 21, while the flame forms a diffusion flame along the increase in the diameter of the diameter-increasing portion 21. Since the exhaust gas collides with the water film on the inner surface of the diameter shrink portion 23 to form an upward flow, the exhaust gas and the diffusion flame are mixed sufficiently. Therefore, a large amount of the exhaust gas can be treated efficiently.

Although not shown, a combination of the diameter-increasing portion 21, the large-diameter straight pipe portion 22, and the diameter shrink portion 23 may be further coupled to the lower end of the diameter shrink portion 23.

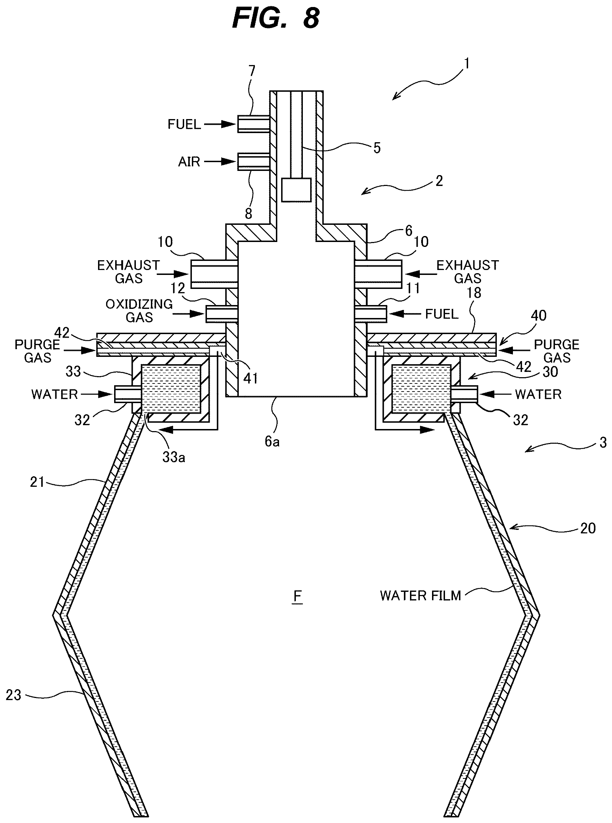

In one embodiment, as shown in FIG. 8, the cylindrical body 20 may not have the large-diameter straight pipe portion 22, and the diameter shrink portion 23 may be coupled to the lower end of the diameter-increasing portion 21. In this embodiment, the above-described water film is formed on the entire inner surfaces of the diameter-increasing portion 21 and the diameter shrink portion 23 during treatment of the exhaust gas. Although not shown, a combination of the diameter-increasing portion 21 and the diameter shrink portion 23 may be further coupled to the lower end of the diameter shrink portion 23.

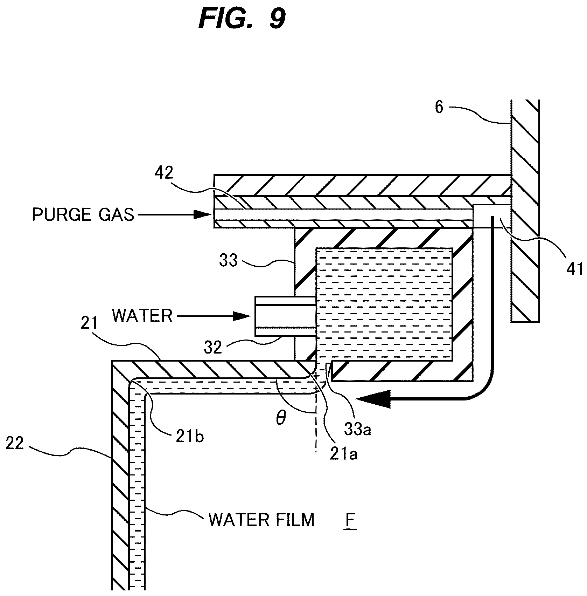

FIG. 9 is an enlarged cross-sectional view schematically showing still another embodiment of the exhaust gas treatment apparatus 1. Configurations of this embodiment, which will not be particularly described, are the same as those of the embodiment described with reference to FIG. 6, and duplicated descriptions will be omitted. In this embodiment, the angle θ of the inner surface of the diameter-increasing portion 21 with respect to the vertical direction is 90 degrees. One end of the diameter-increasing portion 21 is coupled to the water reservoir 33 of the water supply structure 30, and the other end is coupled to an upper end of the large-diameter straight pipe portion 22. The diameter-increasing portion 21 extends perpendicular to the vertical direction from the water reservoir 33, and the diameter increases from the water reservoir 33 toward the large-diameter straight pipe portion 22. In one embodiment, the cylindrical body 20 may further have the diameter shrink portion 23 coupled to the lower end of the large-diameter straight pipe portion 22.

The water in the water reservoir 33 flows out from the slit nozzle 33a while forming the swirling flow, spreads radially outwardly along the inner surface of the diameter-increasing portion 21, and flows downward along the inner surface of the large-diameter straight pipe portion 22. Since the centrifugal force acts in the radially outward direction on the water forming the swirling flow, the water film does not break (peel off) even in the diameter-increasing portion 21 where the diameter increases. As a result, the water film can be formed on the entire inner surface of the cylindrical body 20.

In one embodiment, as shown in FIG. 9, a first connecting portion 21a which is a connecting portion of the diameter-increasing portion 21 with the water reservoir 33, and a second connecting portion 21b which is a connecting portion of the diameter-increasing portion 21 with the large-diameter straight pipe portion 22 may each have a curved shape. The first connecting portion 21a and the second connecting portion 21b each having the curved shape can prevent disturbance of the water flow and water splashing at the first connecting portion 21a and the second connecting portion 21b. A curvature of the curved shape of the first connecting portion 21a and a curvature of the curved shape of the second connecting portion 21b are appropriately set such that the water does not splash. The curvature of the curved shape of the first connecting portion 21a and the curvature of the curved shape of the second connecting portion 21b may be different.

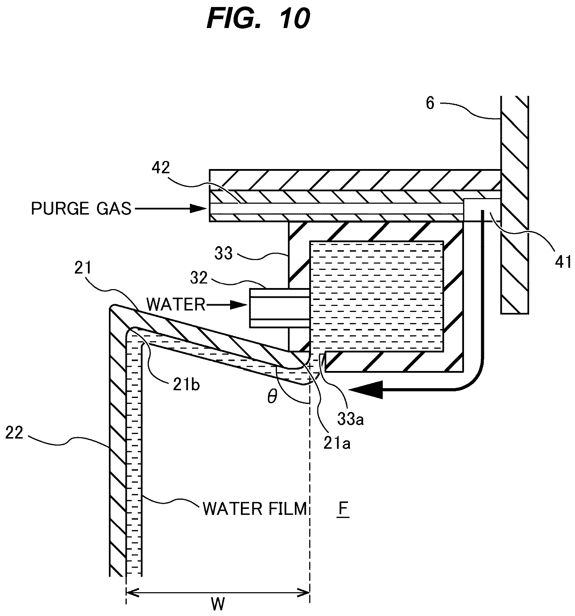

FIG. 10 is an enlarged cross-sectional view schematically showing still another embodiment of the exhaust gas treatment apparatus 1. Configurations of this embodiment, which will not be particularly described, are the same as those of the embodiment described with reference to FIG. 9, and duplicated descriptions will be omitted. In this embodiment, the diameter-increasing portion 21 has a shape such that the diameter gradually increases along an upward direction. The angle θ of the inner surface of the diameter-increasing portion 21 with respect to the vertical direction is 105 degrees.

The water in the water reservoir 33 flows out from the slit nozzle 33a while forming the swirling flow, spreads radially outwardly along the inner surface of the diameter-increasing portion 21, and flows downward along the inner surface of the large-diameter straight pipe portion 22. Since the centrifugal force acts in the radially outward direction on the water forming the swirling flow, the water film does not break (peel off) even in the diameter-increasing portion 21 where the diameter gradually increases along the upward direction. As a result, the water film can be formed on the entire inner surface of the cylindrical body 20.

The flow rate of the water supplied from the water supply port(s) 32 is appropriately set according to a radial width W of the diameter-increasing portion 21 and the surface roughness of the inner surface of the diameter-increasing portion 21 such that the water film does not break on the entire inner surface of the diameter-increasing portion 21. For example, when the radial width W of the diameter-increasing portion 21 is 45 mm and the arithmetic mean roughness (Ra) of the inner surface of the diameter-increasing portion 21 is 16 µm, the flow rate of the water supplied from the water supply port(s) 32 is set to 10 L/min or more.

In one embodiment, as shown in FIG. 10, the first connecting portion 21a which is the connecting portion of the diameter-increasing portion 21 with the water reservoir 33, and the second connecting portion 21b which is the connecting portion of the diameter-increasing portion 21 with the large-diameter straight pipe portion 22 may each have a curved shape. The first connecting portion 21a and the second connecting portion 21b each having the curved shape can prevent disturbance of the water flow and water splashing at the first connecting portion 21a and the second connecting portion 21b. A curvature of the curved shape of the first connecting portion 21a and a curvature of the second connecting portion 21b are appropriately set such that the water does not splash. The curvature of the curved shape of the first connecting portion 21a and the curvature of the curved shape of the second connecting portion 21b may be different.

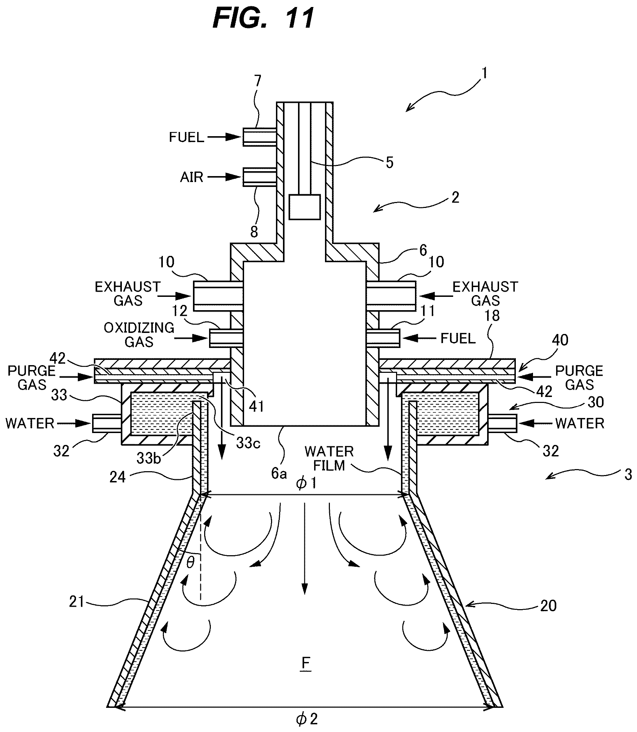

FIG. 11 is a cross-sectional view schematically showing still another embodiment of the exhaust gas treatment apparatus 1. Configurations of this embodiment, which will not be particularly described, are the same as those of the embodiments described with reference to FIGS. 1 to 5, and duplicated descriptions will be omitted. The cylindrical body 20 of this embodiment has a small-diameter straight pipe portion 24 coupled to the upper end of the diameter-increasing portion 21. The small-diameter straight pipe portion 24 has a cylindrical shape and has a diameter equal to the diameter φ1 of the upper end of the diameter-increasing portion 21. The "small-diameter" of the small-diameter straight pipe portion 24 does not mean that the small-diameter straight pipe portion 24 has a diameter smaller than a specific numerical value, but means that the small-diameter straight pipe portion 24 has a smaller diameter relative to the diameter φ2 of the lower end of the diameter-increasing portion 21.

In this embodiment, the exhaust gas flowing into the cylindrical body 20 from the exhaust-gas introduction section 6 of the heat generating section 2 flows from the small-diameter straight pipe portion 24 to the diameter-increasing portion 21, and forms turbulence in the diameter-increasing portion 21. The flame forms a diffusion flame along the increase in the diameter of the diameter-increasing portion 21. The cylindrical body 20 of this embodiment forms the flow passage F for the exhaust gas expanding radially outwardly in the diameter-increasing portion 21, so that a large amount of the exhaust gas can be treated. Therefore, a large amount of the exhaust gas can be treated efficiently.

In this embodiment, the water reservoir 33 of the water supply structure 30 is located radially outwardly of the upper end of the cylindrical body 20. The water reservoir 33 of this embodiment does not have the above-described annular slit nozzle 33a. Instead of the slit nozzle 33a, the water reservoir 33 has an annular weir 33b constituting an inner circumferential wall of the water reservoir 33. A gap 33c is formed in the entire circumference of the water reservoir 33 at a position between an upper end of the weir 33b and an upper surface of the water reservoir 33. A lower end of the weir 33b is coupled to an upper end of the small-diameter straight pipe portion 24. In one embodiment, as shown in FIG. 11, the weir 33b may be integrally formed with an upper portion of the small-diameter straight pipe portion 24.

The water supplied from the water supply port 32 to the water reservoir 33 fills the water reservoir 33. When a liquid level of the water rises above the upper end of the weir 33b, the water flows out through the gap 33c beyond the weir 33b. The water flowing out through the gap 33c flows downward along the entire circumference of an inner surface of the small-diameter straight pipe portion 24 to form a water film on the inner surface of the small-diameter straight pipe portion 24. Since the water flowing downward on the inner surface of the small-diameter straight pipe portion 24 is accelerated due to gravity, the water film does not break (peel off) even in the diameter-increasing portion 21 where the diameter increases. As a result, the water film can be formed on the entire inner surface of the cylindrical body 20 during treatment of the exhaust gas.

In this embodiment as well, the angle θ of the diameter-increasing portion 21 and the flow rate of the water supplied from the water supply port(s) 32 are appropriately set such that the water film does not break on the entire inner surface of the diameter-increasing portion 21.

In this embodiment, the purge gas is blown at an appropriate flow rate from the purge-gas supply flow passage 42, so that a downward flow of the purge gas is formed so as to cover the upper portion of the heat treatment section 3 (a periphery of the gap 33c of the water reservoir 33 in this embodiment). A diameter of the annular groove 41 that releases the purge gas is smaller than the diameter of the small-diameter straight pipe portion 24. Since an opening area of the annular groove 41 can be small, a flow velocity of the purge gas released downward from the annular groove 41 can be increased. Such a downward flow of the purge gas prevents the upper portion of the heat treatment section 3 (the periphery of the gap 33c of the water reservoir 33 in this embodiment) from getting wet to prevent adhesion of the solid matter, so that clogging of the flow passage F for the exhaust gas can be prevented. In one embodiment, when the exhaust gas does not contain the water-reactive substance, the exhaust gas treatment apparatus 1 may not include the purge-gas supply section 40.

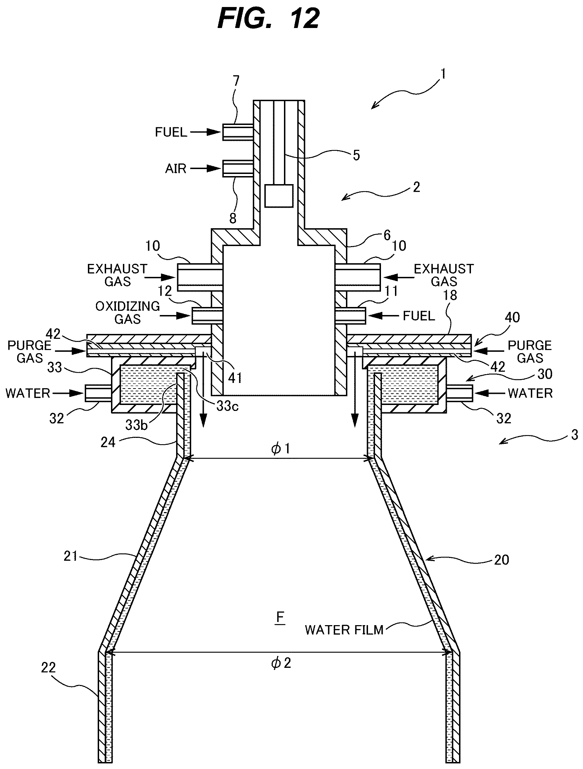

FIG. 12 is a cross-sectional view schematically showing still another embodiment of the exhaust gas treatment apparatus 1. Configurations of this embodiment, which will not be particularly described, are the same as those of the embodiment described with reference to FIG. 11, and duplicated descriptions will be omitted. The cylindrical body 20 of this embodiment further has a large-diameter straight pipe portion 22 coupled to the lower end of the diameter-increasing portion 21. The large-diameter straight pipe portion 22 has a cylindrical shape and has a diameter equal to the diameter φ2 of the lower end of the diameter-increasing portion 21. In this embodiment, the above-described water film is formed on the entire inner surfaces of the small-diameter straight pipe portion 24, the diameter-increasing portion 21, and the large-diameter straight pipe portion 22 during treatment of the exhaust gas. In one embodiment, the inner surface of the large-diameter straight pipe portion 22 may be a rough surface formed by a surface-roughening process.

In this embodiment, the exhaust gas flowing into the cylindrical body 20 from the exhaust-gas introduction section 6 of the heat generating section 2 flows from the small-diameter straight pipe portion 24 to the diameter-increasing portion 21, and forms turbulence in the diameter-increasing portion 21. The flame forms a diffusion flame along the increase in the diameter of the diameter-increasing portion 21 and extends to the large-diameter straight pipe portion 22. The cylindrical body 20 of this embodiment forms the flow passage F for the exhaust gas further extending in the axial direction in the large-diameter straight pipe portion 22, so that a large amount of the exhaust gas can be treated. Therefore, a large amount of the exhaust gas can be treated efficiently.

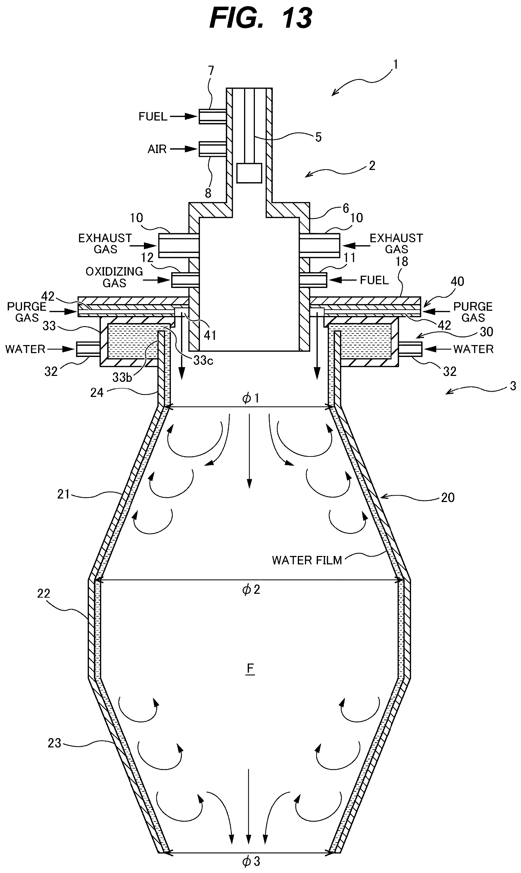

FIG. 13 is a cross-sectional view schematically showing still another embodiment of the exhaust gas treatment apparatus 1. Configurations of this embodiment, which will not be particularly described, are the same as those of the embodiment described with reference to FIG. 12, and duplicated descriptions will be omitted.

The cylindrical body 20 of this embodiment further has a diameter shrink portion 23 coupled to the lower end of the large-diameter straight pipe portion 22. The diameter shrink portion 23 has a shape such that the diameter gradually shrinks along a downward direction. A diameter φ3 of a lower end of the diameter shrink portion 23 is smaller than the diameter φ2 of an upper end of the diameter shrink portion 23. In one embodiment, the diameter φ3 of the lower end of the diameter shrink portion 23 is the same as the diameter φ1 of the upper end of the diameter-increasing portion 21. The inner surface of the diameter shrink portion 23 has an inverted truncated cone shape. In this embodiment, the above-mentioned water film is formed on the entire inner surfaces of the small-diameter straight pipe portion 24, the diameter-increasing portion 21, the large-diameter straight pipe portion 22, and the diameter shrink portion 23 during treatment of the exhaust gas. In one embodiment, the inner surfaces of the large-diameter straight pipe portion 22 and the diameter shrink portion 23 may be rough surfaces formed by a surface-roughening process.

The cylindrical body 20 of this embodiment forms the flow passage F for the exhaust gas further extending in the axial direction in the large-diameter straight pipe portion 22 and the diameter shrink portion 23, so that a large amount of the exhaust gas can be treated. Furthermore, as shown in FIG. 13, the exhaust gas flowing into the cylindrical body 20 from the exhaust-gas introduction section 6 of the heat generating section 2 flows from the small-diameter straight pipe portion 24 to the diameter-increasing portion 21 to form turbulence in the diameter-increasing portion 21. The flame forms a diffusion flame along the increase in the diameter of the diameter-increasing portion 21. Since the exhaust gas collides with the water film on the inner surface of the diameter shrink portion 23 to form an upward flow, the exhaust gas and the diffusion flame are mixed sufficiently. Therefore, a large amount of the exhaust gas can be treated efficiently.

Although not shown, a combination of the small-diameter straight pipe portion 24, the diameter-increasing portion 21, the large-diameter straight pipe portion 22, and the diameter shrink portion 23 may be further coupled to the lower end of the diameter shrink portion 23.

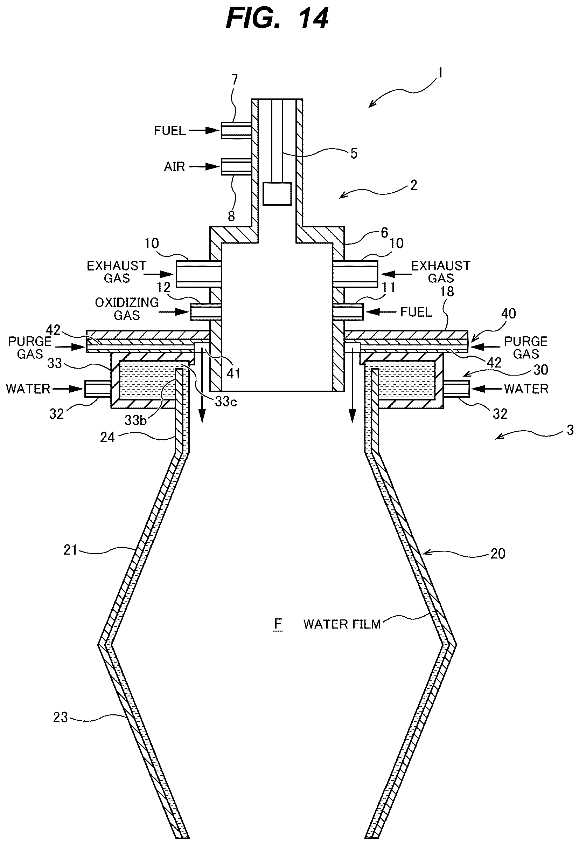

In one embodiment, as shown in FIG. 14, the cylindrical body 20 may not have the large-diameter straight pipe portion 22, and the diameter shrink portion 23 may be coupled to the lower end of the diameter-increasing portion 21. In this embodiment, the above-described water film is formed on the entire inner surfaces of the small-diameter straight pipe portion 24, the diameter-increasing portion 21, and the diameter shrink portion 23. Although not shown, a combination of the small-diameter straight pipe portion 24, the diameter-increasing portion 21, and the diameter shrink portion 23 may be further coupled to the lower end of the diameter shrink portion 23.

In one embodiment, the water supply structure 30 of the embodiment described with reference to FIGS. 1 to 10 may be applied to the exhaust gas treatment apparatus 1 shown in FIGS. 11 to 14. In this case, the water in the water reservoir 33 of the water supply structure 30 flows out from the slit nozzle 33a and flows downward along the inner surface of the small-diameter straight pipe portion 24 to form the water film on the entire inner surface of the cylindrical body 20.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The present invention is applicable to an exhaust gas treatment apparatus and an exhaust gas treatment method for treating an exhaust gas, which is discharged from a manufacturing apparatus or the like for manufacturing semiconductor devices, liquid crystals, LEDs or the like, to make the exhaust gas harmless.

### Reference Signs List

- 1: exhaust gas treatment apparatus
- 2: heat generating section
- 3: heat treatment section (reaction section)
- 5: heat generator
- 6: exhaust-gas introduction section
- 6a: opening
- 7: fuel supply nozzle
- 8: air supply nozzle
- 10: exhaust gas nozzle
- 11: fuel nozzle
- 12: oxidizing-gas nozzle
- 18: lid plate
- 20: cylindrical body
- 21: diameter-increasing portion
- 22: large-diameter straight pipe portion
- 23: diameter shrink portion
- 24: small-diameter straight pipe portion
- 30: water supply structure
- 32: water supply port
- 33: water reservoir
- 33a: slit nozzle
- 33b: weir
- 33c: gap
- 40: purge-gas supply section
- 41: annular groove
- 42: purge-gas supply flow passage

## Claims

1. An exhaust gas treatment apparatus for treating an exhaust gas, comprising:
a heat generating section including a heat generator configured to generate heat; and
a heat treatment section coupled to the heat generating section and configured to perform heat treatment on the exhaust gas with the heat,
wherein the heat treatment section includes:
a cylindrical body that forms a flow passage for the exhaust gas; and
a water supply structure configured to supply water in the cylindrical body to form a water film on an inner surface of the cylindrical body, the cylindrical body having a diameter-increasing portion where a diameter of the cylindrical body increases.

2. The exhaust gas treatment apparatus according to claim 1, wherein the diameter-increasing portion has a shape such that the diameter gradually increases along a downward direction.

3. The exhaust gas treatment apparatus according to claim 1, wherein the cylindrical body further has a small-diameter straight pipe portion coupled to an upper end of the diameter-increasing portion.

4. The exhaust gas treatment apparatus according to claim 1, wherein
an inner surface of the diameter-increasing portion comprises a rough surface formed by a surface-roughening process, and
the inner surface of the diameter-increasing portion has a sliding angle such that the water film is formed on the entire inner surface of the diameter-increasing portion.

5. The exhaust gas treatment apparatus according to claim 1, wherein the cylindrical body further has a large-diameter straight pipe portion coupled to a lower end of the diameter-increasing portion.

6. The exhaust gas treatment apparatus according to claim 5, wherein the cylindrical body further has a diameter shrink portion where the diameter gradually shrinks along a downward direction, the diameter shrink portion being coupled to a lower end of the large-diameter straight pipe portion.

7. The exhaust gas treatment apparatus according to claim 1, wherein the cylindrical body further has a diameter shrink portion where the diameter gradually shrinks along a downward direction, the diameter shrink portion being coupled to a lower end of the diameter-increasing portion.

8. An exhaust gas treatment method of treating an exhaust gas, comprising:
treating the exhaust gas by mixing heat generated by a heat generating section with the exhaust gas in a cylindrical body; and
during treatment of the exhaust gas, supplying water in the cylindrical body to form a water film on an inner surface of the cylindrical body,
wherein the cylindrical body has a diameter-increasing portion where a diameter of the cylindrical body increases, and
during treatment of the exhaust gas, the water film is formed on an entire inner surface of the diameter-increasing portion.

9. The exhaust gas treatment method according to claim 8, wherein the diameter-increasing portion has a shape such that the diameter gradually increases along a downward direction.

10. The exhaust gas treatment method according to claim 8, wherein
the cylindrical body further has a small-diameter straight pipe portion coupled to an upper end of the diameter-increasing portion, and
during treatment of the exhaust gas, the water film is formed on an entire inner surface of the small-diameter straight pipe portion.

11. The exhaust gas treatment method according to claim 8, wherein
the inner surface of the diameter-increasing portion comprises a rough surface formed by a surface-roughening process, and
the inner surface of the diameter-increasing portion has a sliding angle such that the water film is formed on the entire inner surface of the diameter-increasing portion.

12. The exhaust gas treatment method according to claim 8, wherein
the cylindrical body further has a large-diameter straight pipe portion coupled to a lower end of the diameter-increasing portion, and
during treatment of the exhaust gas, the water film is formed on an entire inner surface of the large-diameter straight pipe portion.

13. The exhaust gas treatment method according to claim 12, wherein
the cylindrical body further has a diameter shrink portion where the diameter gradually shrinks along a downward direction, the diameter shrink portion being coupled to a lower end of the large-diameter straight pipe portion, and
during treatment of the exhaust gas, the water film is formed on an entire inner surface of the diameter shrink portion.

14. The exhaust gas treatment method according to claim 8, wherein
the cylindrical body further has a diameter shrink portion where the diameter gradually shrinks along a downward direction, the diameter shrink portion being coupled to a lower end of the diameter-increasing portion, and
during treatment of the exhaust gas, the water film is formed on an entire inner surface of the diameter shrink portion.

## Amended claims

### Amended claims under Art. 19.1 PCT

1. An exhaust gas treatment apparatus for treating an exhaust gas, comprising:
a heat generating section including a heat generator configured to generate heat; and
a heat treatment section coupled to the heat generating section and configured to perform heat treatment on the exhaust gas with the heat,
wherein the heat treatment section includes:
a cylindrical body that forms a flow passage for the exhaust gas; and
a water supply structure configured to supply water in the cylindrical body to form a water film on an inner surface of the cylindrical body, the cylindrical body having a diameter-increasing portion where a diameter of the cylindrical body increases,
an angle of an inner surface of the diameter-increasing portion on which the water film is formed with respect to a vertical direction is in a range of 90 degrees to 105 degrees.

2. The exhaust gas treatment apparatus according to claim 1, wherein the cylindrical body further has a small-diameter straight pipe portion coupled to an upper end of the diameter-increasing portion.

3. The exhaust gas treatment apparatus according to claim 1, wherein
an inner surface of the diameter-increasing portion comprises a rough surface formed by a surface-roughening process, and
the inner surface of the diameter-increasing portion has a sliding angle such that the water film is formed on the entire inner surface of the diameter-increasing portion.

4. The exhaust gas treatment apparatus according to claim 1, wherein the cylindrical body further has a large-diameter straight pipe portion coupled to a lower end of the diameter-increasing portion.

5. The exhaust gas treatment apparatus according to claim 5, wherein the cylindrical body further has a diameter shrink portion where the diameter gradually shrinks along a downward direction, the diameter shrink portion being coupled to a lower end of the large-diameter straight pipe portion.

6. The exhaust gas treatment apparatus according to claim 1, wherein the cylindrical body further has a diameter shrink portion where the diameter gradually shrinks along a downward direction, the diameter shrink portion being coupled to a lower end of the diameter-increasing portion.

7. An exhaust gas treatment method of treating an exhaust gas, comprising:
treating the exhaust gas by mixing heat generated by a heat generating section with the exhaust gas in a cylindrical body; and
during treatment of the exhaust gas, supplying water in the cylindrical body to form a water film on an inner surface of the cylindrical body,
wherein the cylindrical body has a diameter-increasing portion where a diameter of the cylindrical body increases, and
during treatment of the exhaust gas, the water film is formed on an entire inner surface of the diameter-increasing portion,
an angle of the inner surface of the diameter-increasing portion with respect to a vertical direction is in a range of 90 degrees to 105 degrees.

8. The exhaust gas treatment method according to claim 8, wherein
the cylindrical body further has a small-diameter straight pipe portion coupled to an upper end of the diameter-increasing portion, and
during treatment of the exhaust gas, the water film is formed on an entire inner surface of the small-diameter straight pipe portion.

9. The exhaust gas treatment method according to claim 8, wherein
the inner surface of the diameter-increasing portion comprises a rough surface formed by a surface-roughening process, and
the inner surface of the diameter-increasing portion has a sliding angle such that the water film is formed on the entire inner surface of the diameter-increasing portion.

10. The exhaust gas treatment method according to claim 8, wherein
the cylindrical body further has a large-diameter straight pipe portion coupled to a lower end of the diameter-increasing portion, and
during treatment of the exhaust gas, the water film is formed on an entire inner surface of the large-diameter straight pipe portion.

11. The exhaust gas treatment method according to claim 12, wherein
the cylindrical body further has a diameter shrink portion where the diameter gradually shrinks along a downward direction, the diameter shrink portion being coupled to a lower end of the large-diameter straight pipe portion, and
during treatment of the exhaust gas, the water film is formed on an entire inner surface of the diameter shrink portion.

12. The exhaust gas treatment method according to claim 8, wherein
the cylindrical body further has a diameter shrink portion where the diameter gradually shrinks along a downward direction, the diameter shrink portion being coupled to a lower end of the diameter-increasing portion, and
during treatment of the exhaust gas, the water film is formed on an entire inner surface of the diameter shrink portion.

13. The exhaust gas treatment apparatus according to claim 1, wherein the angle is 90 degrees.

14. The exhaust gas treatment method according to claim 8, wherein the angle is 90 degrees.
